# EUROPÄISCHE PATENTANMELDUNG

(11) **EP 0 589 193 A1**
(43) Veröffentlichungstag der Anmeldung: **30.03.1994**
(21) Anmeldenummer: 93112780.7
(22) Anmeldetag: 10.08.1993
(51) Int. Cl.: C08J 5/04, B29C 67/14

(54) **Flächiger Verbundwerkstoff**

(30) Priorität: 28.08.1992 DE 4228606
(71) Anmelder: BASF Aktiengesellschaft, D-67063 Ludwigshafen (DE)
(72) Erfinder: Baumgartl, Horst, Dr., D-6500 Mainz 1 (DE); Schlarb, Alois, Dr., D-6710 Frankenthal (DE); Brentrup, Karl-Ludwig, D-4500 Osnabrueck (DE); Ittemann, Peter, Dr., D-6800 Mannheim 31 (DE); Warzelhan, Volker, Dr., D-6719 Weisenheim (DE)

(57) **Zusammenfassung**

Die Erfindung betrifft einen flächigen Verbundwerkstoff aus einer Polyolefinmatrix und Flachsfasermatten als Verstärkungsmaterial. Die Verbundwerkstoffe finden insbesondere im Automobilbau Anwendung.

## Beschreibung

Die Erfindung betrifft einen flächigen Verbundwerkstoff aus einer Polyolefinmatrix und Naturfasermatten als Verstärkungsmaterial.

Verbundwerkstoffe aus einer Polypropylenmatrix und Glasfasermatten als Verstärkungsmaterial sind bekannt. Sie werden in zunehmendem Maße zur Herstellung von Automobilteilen verwendet. Die Einsatzmöglichkeiten derartiger Verbundwerkstoffe sind jedoch durch den verhältnismäßig hohen Preis der Glasfasermatten begrenzt. Eine Möglichkeit zur Kostenreduzierung wäre der Einsatz billigerer Fasermaterialien.

In der DE-A 14 54 988 ist die Herstellung von Formkörpern aus mit faserigen Substanzen verstärkten Thermoplasten beschrieben, wobei vorgebildete Verbundstoffe zum plastischen Fließen erhitzt und anschließend unter Druck verformt werden. Die faserigen Substanzen können in Form von Matten vorliegen, sie können auch organischer Natur sein, wobei als Beispiele Wolle und Baumwolle genannt sind. Diese Fasern ergeben jedoch Verbundwerkstoffe, die eine geringe Festigkeit und Steifigkeit aufweisen und daher leicht brechen. Die EP-A 345 463 betrifft faserverstärkte Thermoplastbahnen. Als geeignete Naturfasern, aus denen die verstärkend wirkenden Fasermatten hergestellt werden können, sind z.B. Jutefasern genannt. Es hat sich gezeigt, daß Verbundwerkstoffe aus Polyolefinmatrix und Jutefasermatten zwar ein befriedigendes Festigkeits- und Steifigkeitsniveau aufweisen; die Schlagzähigkeit der Verbundwerkstoffe ist aber zu niedrig, was zu Sprödbruch führen kann.

Der Erfindung lag also die Aufgabe zugrunde, billige Verbundwerkstoffe aus einer Polyolefinmatrix und Naturfasermatten bereitzustellen, die eine verhältnismäßig hohe Zähigkeit, Festigkeit und Steifigkeit aufweisen.

Diese Aufgabe wird erfindungsgemäß gelöst durch einen flächigen Verbundwerkstoff aus einer Polyolefinmatrix und Flachsfasermatten als Verstärkungsmaterial.

Als Polyolefine sind Ethylen- und Propylenhomo- und copolymerisate bevorzugt. Besonders gut geeignet ist Polypropylen mit einem Schmelzindex MFI zwischen 5 und 500, insbesondere zwischen 50 und 400 [g/10 min] (bei 230°C/2,16 kg), sowie entsprechende Pfropfcopolymerisate, z.B. mit Acrylsäure oder Maleinsäureanhydrid. Wenn man als Polyolefinmatrix eine Mischung verwendet aus 91 - 80 Gew.-% Polypropylen und 1 - 20 Gew.-% eines mit Maleinsäureanhydrid gepfropften Polypropylens, dann erhält man Verbundwerkstoffe mit besonders guter Festigkeit und Steifigkeit. Dem Polyolefin können bis zu 100 Gew.-% Rezyklat von aufgearbeitetem Abfallmaterial mit 20 bis 50 Gew.-% kurzen Naturfasern oder Glasfasern zugesetzt sein, ferner kann es die üblichen Zusatzstoffe wie Stabilisatoren, Füllstoffe und Flammschutzmittel enthalten.

Als Fasermatten werden solche aus Flachsfasern eingesetzt: sie können in untergeordneten Mengen auch andersartige Fasern, z.B. aus Glas, Jute, Sisal oder Baumwolle enthalten. Die Matten werden auf übliche Weise durch Ablegen von Fasern oder nach dem Krempelverfahren hergestellt. Die Fasern, aus denen die Matten bestehen, sollen vorzugsweise eine mittlere Länge von mehr als 10 mm aufweisen, besonders bevorzugt sind sie 20 bis 100 mm lang. Es ist vorteilhaft, der Mischung aus Polyolefinmatrix und Fasermatten einen Haftvermittler. z.B. ein reaktives Silan in Mengen von 0,1 bis 2 Gew.-% zuzusetzen. Der Haftvermittler kann entweder auf Polyolefingranulat aufgetrommelt werden oder auf die Fasern durch Tränken oder Aufsprühen aufgebracht werden. Bei einer anderen speziellen Ausführungsform werden auf übliche Weise genadelte Matten eingesetzt. Das Flächengewicht der Fasermatten kann sich in weiten Grenzen zwischen 200 und 4000 [g·m⁻²] bewegen.

Zur Herstellung der erfindungsgemäßen Verbundwerkstoffe werden die Fasermatten mit geschmolzenem Polyolefin imprägniert. Die Mengenverhältnisse sind dabei so zu wählen, daß im fertigen Werkstoff der Fasergehalt 20 bis 70, vorzugsweise 30 bis 50 Gew.-% beträgt. Bei einer bevorzugten Ausführungsform werden in eine Doppelbandpresse gleichzeitig Fasermatten und Polyolefinschmelze zugeführt und bei Drücken zwischen 1 und 50 [bar] miteinander verpreßt. Grundsätzlich ist es auch möglich, das Polyolefin in Form von Folien, Pulver, Granulat, sowie als Lösung oder Emulsion mit den Fasermatten zusammenzuführen und gemeinsam oberhalb der Schmelztemperatur diskontinuierlich oder kontinuierlich, z.B. auf einem Kalander, zu verpressen. Das Verpressen muß unter einem so hohen Druck vorgenommen werden, daß nach dem Abkühlen, vorzugsweise auf Raumtemperatur, ein kompaktes, flächiges Halbzeug entsteht.

Dieses Halbzeug kann zugeschnitten und nach üblichen Methoden durch Pressen oder Tiefziehen bei Temperaturen oberhalb des Erweichungsbereichs des Thermoplasten zu Formteilen verarbeitet werden, die z.B. in der Automobilindustrie, für den Maschinenbau und für Haushaltsgeräte Anwendung finden.

Die in den Beispielen genannten Teile und Prozente beziehen sich auf das Gewicht.

### Beispiele

1. Zwei mechanisch verfestigte Flachsfasermatten mit einem Flächengewicht von 800 g/m² wurden bei 220°C in einer Doppelbandpresse mit einem Polypropylen-Schmelzefilm aus 98 Teilen eines Homopolypropylens und 2 Teilen eines handelsüblichen PP-Stabilisatorbatches getränkt und zu einem 3,8 mm dicken Halbzeug mit einem Fasergehalt von 40 % verpresst. Anschließend wurde dieses Halbzeug über die Schmelztemperatur des Polypropylens aufgeheizt und auf einer hydraulischen Presse in einem Tauchkantenwerkzeug bei einer Werkzeugtemperatur von 60°C fließgepreßt. Den so produzierten Fertigteilen wurden Prüfkörper entnommen und nach DIN EN 61 (Zugfestigkeit, E-Modul) und ISO 179/1D (Schlagzähigkeit) geprüft. Ergebnisse siehe Tabelle.
2. Beispiel 1 wurde wiederholt, wobei jedoch der Polymermatrix 1 Teil eines handelsüblichen Haftvermittlers auf Basis eines reaktiven Silans zugesetzt wurde.
3. Beispiel 1 wurde wiederholt, wobei jedoch statt Flachsfasermatten solche aus Sisal eingesetzt wurden.
4. Beispiel 1 wurde wiederholt, wobei jedoch statt Flachsfasermatten solche aus Jute eingesetzt wurden.

**Tabelle**

| Beispiel | 1 | 2 | 3 | 4 |
|---|---|---|---|---|
| Zugfestigkeit [MPa] | 43 | 65 | 35 | 35 |
| Zug-E-Modul [MPa] (0,05-0,5 % Dehnung) | 4500 | 6500 | 3600 | 4100 |
| Schlagzähigkeit [kJ·m⁻²] | 20 | 18 | 39 | 11 |

Die Beispiele 3 und 4 sind nicht erfindungsgemäß.

## Patentansprüche

1. Flächiger Verbundwerkstoff aus einer Polyolefinmatrix und Naturfasermatten als Verstärkungsmaterial, dadurch gekennzeichnet, daß das Verstärkungsmaterial überwiegend aus Flachsfasern besteht.

2. Flächiger Verbundwerkstoff nach Anspruch 1, dadurch gekennzeichnet, daß er 20 bis 70 Gew.-% Fasern enthält.

3. Flächiger Verbundwerkstoff nach Anspruch 1, dadurch gekennzeichnet, daß die Fasermatten genadelt sind.

4. Flächiger Verbundwerkstoff nach Anspruch 1, dadurch gekennzeichnet, daß die Fasern, aus denen die Matten bestehen, eine mittlere Länge von mehr als 10 mm aufweisen.

5. Flächiger Verbundwerkstoff nach Anspruch 1, dadurch gekennzeichnet, daß das Polyolefin ein Polypropylen mit einem Schmelzindex MFI zwischen 5 und 500 [g/10 min] (230°C/2,16 kg) ist.

6. Flächiger Verbundwerkstoff nach Anspruch 1, dadurch gekennzeichnet, daß die Polyolefinmatrix eine Mischung aus 99 - 80 Gew.-% Polypropylen und 1 bis 20 Gew.-% eines mit Maleinsäureanhydrid gepfropften Polypropylens ist.

7. Flächiger Verbundwerkstoff nach Anspruch 1, dadurch gekennzeichnet, daß die Mischung aus Polyolefinmatrix und Fasermatten 0,1 bis 2 Gew.-% eines reaktiven Silans als Haftvermittler enthält.

8. Verwendung des Verbundwerkstoffs nach Anspruch 1 zur Herstellung von Formteilen für die Automobilindustrie, für den Maschinenbau oder für Haushaltsgeräte.
